# EUROPÄISCHE PATENTANMELDUNG

(11) **EP 1 504 963 A1**
(43) Veröffentlichungstag der Anmeldung: **09.02.2005**
(21) Anmeldenummer: 04016643.1
(22) Anmeldetag: 15.07.2004
(51) Int. Cl.: B60R 9/058

(54) **Dachlastenträger**

(30) Priorität: 06.08.2003 DE 10337540
(71) Anmelder: ORIS FAHRZEUGTEILE HANS RIEHLE GmbH, 71696 Möglingen (DE)
(72) Erfinder: Dreher, Martin, 71696 Möglingen (DE); Schierle, Horst, 71691 Freiberg (DE); Neumann, Peter, 71720 Oberstenfeld (DE); Rimmelspacher, Bernhard, 76287 Rheinstetten (DE); Riehle, Jörg, 71679 Asperg (DE)
(74) Vertreter: HOEGER, STELLRECHT & PARTNER Patentanwälte

(57) **Zusammenfassung**

Um einen Dachlastenträger umfassend einen sich von einem Längsseitenbereich eines Fahrzeugdachs zum anderen Längsseitenbereich erstreckenden Querträger sowie endseitig des Querträgers angeordnete Fußteile, welche mit einem durch Drehen um eine Drehachse an einem fahrzeugfesten Gegenstück festlegbaren Fixierelement in einer Aufnahme an dem Fahrzeugdach montierbar sind, derart zu verbessern, daß sich das Fixierelement nicht lösen kann, wird vorgeschlagen, daß das Fixierelement ein an dem Gegenstück festlegbares Eindrehelement und ein gelenkig an dem Eindrehelement gelagertes Betätigungselement aufweist, daß das Betätigungselement zur Drehsicherung des Fixierelements in eine sich quer zur Drehachse erstreckende Sicherungsstellung umlegbar ist, in welcher das Betätigungselement drehfest mit dem Eindrehelement gekoppelt ist, und daß das Fußteil Begrenzungselemente aufweist, welche ein Drehen des in der Sicherungsstellung stehenden Betätigungselements um die Drehachse im wesentlichen blockieren.

## Beschreibung

Die Erfindung betrifft einen Dachlastenträger umfassend einen sich von einem Längsseitenbereich eines Fahrzeugdachs zum anderen Längsseitenbereich erstreckenden Querträger sowie endseitig des Querträgers angeordnete Fußteile, welche mit einem durch Drehen um eine Drehachse an einem fahrzeugfesten Gegenstück festlegbaren Fixierelement in einer Aufnahme an dem Fahrzeugdach montierbar sind.

Derartige Dachlastenträger sind aus dem Stand der Technik bekannt.

Bei diesen besteht das Problem, daß sich das durch Drehen festlegbare Fixierelement beim Fahren des Fahrzeugs lösen kann.

Der Erfindung liegt daher die Aufgabe zugrunde, einen Dachlastenträger der gattungsgemäßen Art derart zu verbessern, daß sich das Fixierelement nicht lösen kann.

Diese Aufgabe wird bei einem Dachlastenträger der eingangs beschriebenen Art erfindungsgemäß dadurch gelöst, daß das Fixierelement ein an dem Gegenstück festlegbares Eindrehelement und ein gelenkig an dem Eindrehelement gelagertes Betätigungselement aufweist, daß das Betätigungselement zur Drehsicherung des Fixierelements in eine sich quer zur Drehachse erstreckende Sicherungsstellung umlegbar ist, in welcher das Betätigungselement drehfest mit dem Eindrehelement gekoppelt ist, und daß das Fußteil Begrenzungselemente aufweist, welche ein Drehen des in der Sicherungsstellung stehenden Betätigungselements um die Drehachse im wesentlichen blockieren.

Der Vorteil der erfindungsgemäßen Lösung ist somit darin zu sehen, daß durch das Verbringen des Betätigungselements in die Sicherungsstellung und das Begrenzen der Bewegung des Betätigungselements in der Sicherungsstellung die Möglichkeit besteht, das Fixierelement zuverlässig gegen eine Drehung um die Drehachse zu fixieren, so daß sichergestellt ist, daß sich das Fixierelement nicht lösen kann und somit das jeweilige Fußteil zuverlässig in der Aufnahme am Kraftfahrzeug fixiert bleibt.

Hinsichtlich der Ausbildung des Fußteils und der Realisierung der Begrenzungselemente an diesem wurden bislang keine näheren Angaben gemacht.

So könnte das Fußteil ein einstückiges Teil sein, an welchem Begrenzungselemente, in Form von in der Sicherungsstellung auf das Betätigungselement einwirkenden Riegelelementen ausgebildet sind.

Eine konstruktiv sehr einfache und besonders günstige Lösung sieht vor, daß das Fußteil einen Ständer und eine vom Ständer lösbare Abdeckung umfaßt.

Eine derart lösbare Abdeckung hat ohnehin den Vorteil, daß sie sich günstig dazu einsetzen läßt, einen Zugang zu einer Aufnahmenut im Querträger bei gelöster Abdeckung zu schaffen und bei aufgesetzter Abdeckung zu verschließen, so daß an dem Querträger montierbare Dachlasten durch Aufsetzen der Abdeckung gesichert werden können.

Ferner läßt sich eine derartige lösbare Abdeckung besonders günstig dahingehend einsetzen, daß das Betätigungselement bei vom Ständer gelöster Abdeckung aus der Sicherungsstellung herausbewegbar ist.

Noch günstiger ist es, wenn die Abdeckung auch zum Sichern des Betätigungselements eingesetzt wird. In diesem Fall ist vorzugsweise vorgesehen, daß alle Begrenzungselemente bei an dem Ständer in Abdeckstellung fixierter Abdeckung wirksam sind, so daß das Fixieren der Abdeckung gleichzeitig dazu dient, alle Begrenzungselemente, die die Sicherungsstellung des Betätigungselements aufrecht erhalten, wirksam werden zu lassen.

Konstruktiv sieht eine besonders einfache Lösung vor, daß der Ständer mit einem Ständerkörper mindestens ein Begrenzungselement für das in der Sicherungsstellung stehende Betätigungselement bildet.

Ferner ist es günstig, wenn der Ständer mit einer Ständerbasis ein Begrenzungselement für das in der Sicherungsstellung stehende Betätigungselement bildet.

Um auch die Abdeckung in ihrer am Ständer fixierten Stellung in günstiger Weise wirksam werden zu lassen, ist vorzugsweise vorgesehen, daß die Abdeckung mindestens ein Begrenzungselement für das in der Sicherungsstellung stehende Betätigungselement bildet.

Noch besser ist es, wenn die Abdeckung einen Steg aufweist, welcher ein Begrenzungselement für das in der Sicherungsstellung stehende Betätigungselement bildet.

Vorzugsweise ist vorgesehen, daß die Abdeckung und der Ständer bei an dem Ständer in Abdeckstellung fixierter Abdeckung einen Aufnahmeraum für das in der Sicherungsstellung stehende Betätigungselement begrenzen.

Die Abdeckung kann in unterschiedlichster Art und Weise vom Ständer lösbar sein. So wäre es beispielsweise denkbar, die Abdeckung klappbar am Ständer zu halten und durch Wegklappen vom Ständer aus der Abdeckstellung zu lösen.

Eine konstruktiv besonders günstige Lösung sieht jedoch vor, daß die Abdeckung vom Ständer abnehmbar ist und somit ein besonders günstiger Zugang für Montagearbeiten zur Verfügung steht.

Um die Abdeckung in ihrer Abdeckstellung sicher fixieren zu können, ist vorzugsweise vorgesehen, daß die Abdeckung in ihrer Abdeckstellung durch ein Schloß am Ständer oder am Querträger festlegbar ist.

Hinsichtlich der Ausbildung des Fixierelements selbst wurden bislang keine näheren Angaben gemacht. So wäre es beispielsweise denkbar, die Verbindung zwischen dem Betätigungselement und dem Eindrehelement in der Sicherungsstellung des Betätigungselements durch besondere Maßnahmen drehfest zu blockieren.

Eine konstruktiv besonders einfache Lösung sieht vor, daß das Betätigungselement über ein einachsiges Gelenk mit dem Eindrehelement verbunden ist.

Alternativ dazu ist es aber auch denkbar, daß das Betätigungselement über ein mehrachsiges Gelenk mit dem Eindrehelement verbunden ist und daß das mehrachsige Gelenk in der Sicherungsstellung eine drehfeste Verbindung zwischen dem Eindrehelement und dem Betätigungselement bildet.

Hinsichtlich der Einwirkung des Fixierelements auf das Fußteil wurden bislang keine näheren Angaben gemacht. So sind beliebige Möglichkeiten denkbar, wie das Fixierelement am Fußteil angreifen kann.

Eine konstruktiv besonders einfache Lösung sieht vor, daß das Fußteil ein Druckaufnahmeteil aufweist, auf welches das Fixierelement einwirkt.

Eine derartige Einwirkung des Fixierelements läßt sich besonders einfach dadurch realisieren, daß das Eindrehteil des Fixierelements das Druckaufnahmeteil durchsetzt.

Um das Fußteil sicher an der Aufnahme des Kraftfahrzeugs festlegen zu können, ist vorzugsweise vorgesehen, daß das Fixierelement eine Druckfläche aufweist, mit welcher das Fixierelement auf das Druckaufnahmeteil wirkt.

Die Druckfläche kann dabei in unterschiedlichster Art und Weise angeordnet sein.

Eine Lösung sieht vor, daß die Druckfläche am Eindrehteil vorgesehen ist.

Eine alternative Lösung hierzu sieht vor, daß die Druckfläche an dem Betätigungselement angeordnet ist.

Besonders günstig ist dabei eine Lösung, bei welcher die Druckfläche als zu der Schwenkachse des Betätigungselements exzentrisch verlaufende Fläche ausgebildet ist, welche in der Sicherungsstellung einen größeren Abstand von der Schwenkachse aufweist als in einer Betätigungsstellung des Betätigungselements. Diese Lösung hat den großen Vorteil, daß damit aufgrund der exzentrischen Wirkung der Druckfläche ein Ausgleich von Spiel möglich ist, um eine kraftschlüssige Fixierung des Fixierelements und/oder eine spielfreie Fixierung des Fußteils an der Aufnahme im Fahrzeugdach zu erreichen, ohne daß das Eindrehelement mit großer Kraft eingedreht werden muß, da die Herausnahme des Spiels über die exzentrisch verlaufende Druckfläche möglich ist.

Um die Verbindung zwischen dem Fußteil und der Aufnahme im Fahrzeugdach spielfrei zu halten, ist es ferner günstig, wenn zwischen der Druckfläche und dem Druckaufnahmeteil ein elastisches Zwischenelement wirksam ist, da durch dieses Zwischenelement ein Spielausgleich möglich ist, auch wenn durch das Eindrehelement selbst noch keine spielfreie Verbindung hergestellt ist, insbesondere auch dann, wenn die Druckfläche exzentrisch ausgebildet ist.

Dieses Zwischenelement läßt sich besonders einfach so anordnen, daß die Druckfläche unmittelbar auf das Zwischenelement wirkt.

Im einfachsten Fall ist das elastische Zwischenelement als Tellerfeder ausgebildet.

Um mit dem Betätigungselement das Eindrehelement in das Gegenstück eindrehen zu können, wäre es denkbar, das Betätigungselement als quer zur Drehachse des Eindrehelements verlaufenden Hebel einzusetzen, wobei dies es erforderlich macht, das Betätigungselement jeweils gegenüber dem Eindrehelement um 180° versetzen zu können, wodurch es erforderlich ist, das Betätigungselement um eine quer zur Drehachse verlaufende Achse gegenüber dem Eindrehelement umklappen zu können.

Im Hinblick auf ein günstiges Eindrehen des Eindrehelements ist es jedoch von Vorteil, wenn das Betätigungselement aus der Sicherungsstellung heraus in eine Betätigungsstellung bringbar ist.

Eine Betätigungsstellung liegt vorzugsweise dann vor, wenn sich das Betätigungselement mit seiner Längsachse näherungsweise koaxial zur Drehachse erstreckt, da dadurch über ein Drehen des Betätigungselements auch ein Drehen des Eindrehelements erreicht werden kann.

Da jedoch aufgrund der räumlichen Verhältnisse ein manuelles Angreifen am Betätigungselement ungünstig ist, ist vorzugsweise vorgesehen, daß das Betätigungselement Angriffsflächen für ein Werkzeug aufweist, mit welchem das Betätigungselement drehbar ist.

Damit kann in einfacher Weise, beispielsweise mittels eines handelsüblichen Werkzeugs, in der Betätigungsstellung des Betätigungselements das Eindrehelement eingedreht werden und nachher eine Sicherung des Eindrehelements durch Umschwenken des Betätigungselements von der Betätigungsstellung in die Sicherungsstellung erfolgen.

Weitere Merkmale und Vorteile der vorliegenden Erfindung sind Gegenstand der nachfolgenden Beschreibung sowie der zeichnerischen Darstellung einiger Ausführungsbeispiele.

In der Zeichnung zeigen:
- Fig. 1: eine schematische Ansicht von vorne eines auf einem Fahrzeugdach montierten erfindungsgemäßen Dachlastenträgers;
- Fig. 2: eine Explosionsdarstellung eines ersten Ausführungsbeispiels eines erfindungsgemäßen Dachlastenträgers im Bereich eines Fußteils mit abgenommener Abdeckung;
- Fig. 3: eine Explosionsdarstellung ähnlich Fig. 2 in umgekehrter Perspektive;
- Fig. 4: einen vergrößert dargestellten Schnitt durch ein Fixierelement für das erste Ausführungsbeispiel des erfindungsgemäßen Dachlastenträgers mit in durchgezogen gezeichneter Betätigungsstellung und in gestrichelt gezeichneter Sicherungsstellung;
- Fig. 5: eine perspektivische Darstellung ähnlich Fig. 3 bei in Abdeckstellung auf einem Ständer des Fußteils sitzender Abdeckung;
- Fig. 6: eine Darstellung ähnlich Fig. 4 eines Fixierelements eines zweiten Ausführungsbeispiels eines erfindungsgemäßen Dachlastenträgers;
- Fig. 7: eine Darstellung ähnlich Fig. 4 eines Fixierelements eines dritten Ausführungsbeispiels eines erfindungsgemäßen Dachlastenträgers;
- Fig. 8: eine Darstellung ähnlich Fig. 4 ähnlich eines Fixierelements eines vierten Ausführungsbeispiels eines erfindungsgemäßen Dachlastenträgers;
- Fig. 9: eine Draufsicht auf das vierte Ausführungsbeispiel des Fixierelements in Richtung des Pfeils A bei in Sicherungsstellung stehendem Betätigungselements und

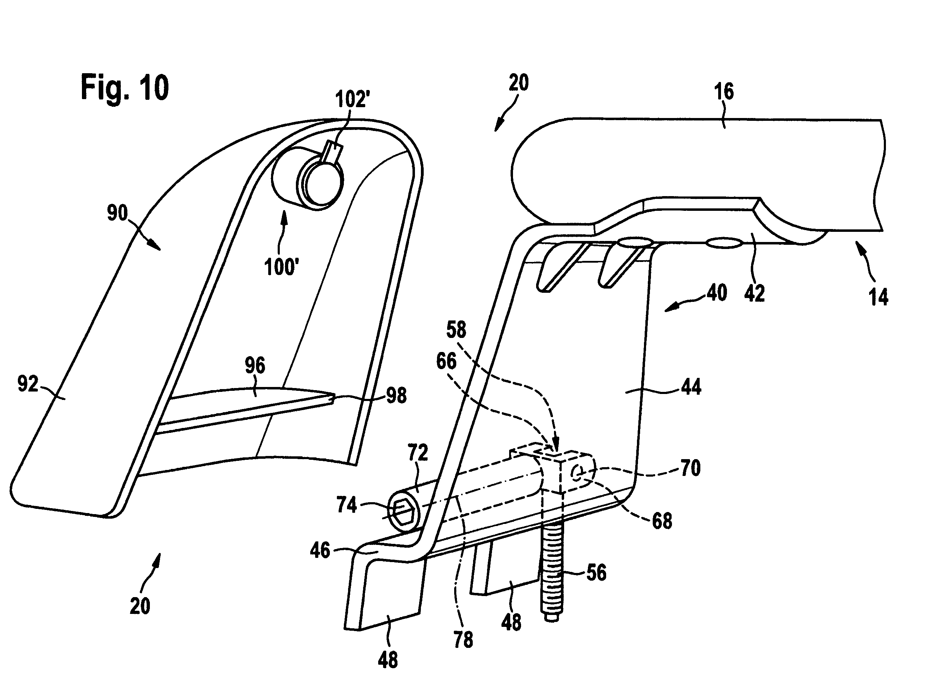

- Fig. 10: eine Darstellung ähnlich Fig. 3 eines fünften Ausführungsbeispiels eines erfindungsgemäßen Dachlastenträgers.

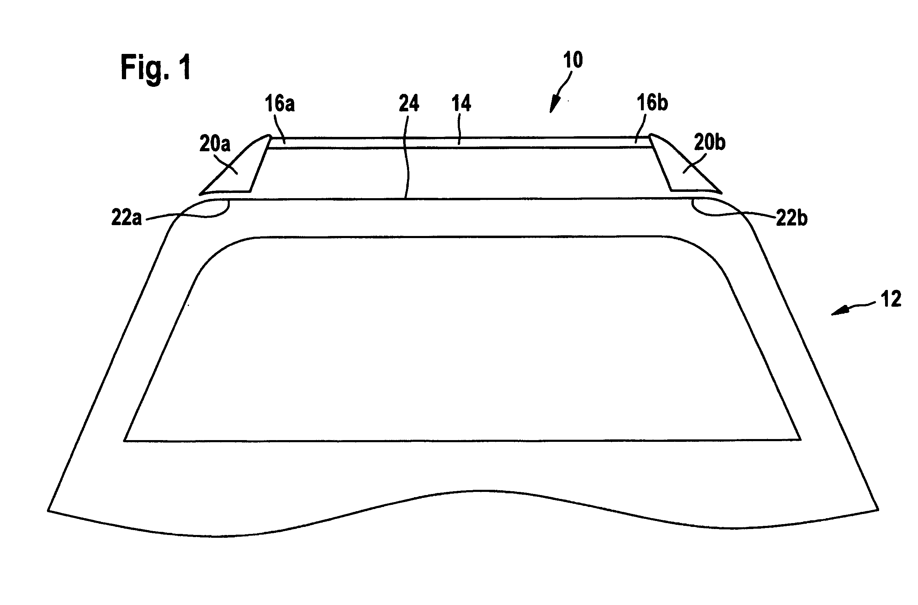

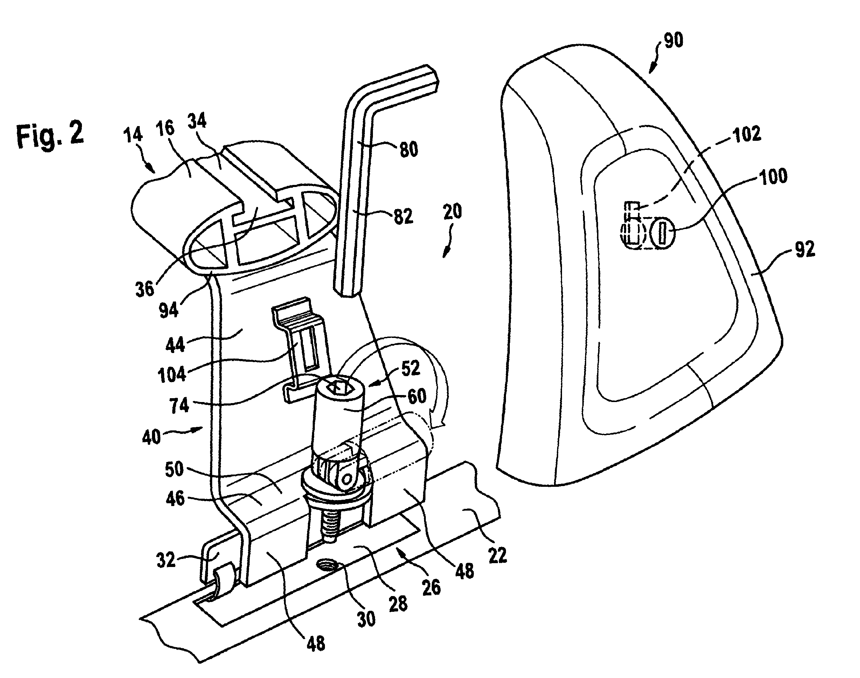

Ein erstes Ausführungsbeispiel eines in Fig. 1 dargestellten und mit 10 bezeichneten Dachlastenträgers für ein Kraftfahrzeug 12 umfaßt einen Querträger 14, welcher im Bereich seiner Enden 16a, b durch Fußteile 20a, b gehalten ist, die sich im Bereich von seitlichen, entlang einer Längsseite des Kraftfahrzeugs verlaufenden Randbereichen 22a, 22b eines Fahrzeugdachs 24 abstützen, vorzugsweise in hierfür in den Randbereichen vorgesehenen Aufnahmen 26, wie in Fig. 2 dargestellt.

Jede der Aufnahmen umfaßt dabei beispielsweise Stützflächen 28 sowie eine der Aufnahme 26 zugeordnete Gewindebohrung 30 zur Fixierung des Fußteils.

Vorzugsweise sind die Aufnahmen 26 durch einen Deckel 32 bei nicht eingesetztem Dachlastenträger 10 verschließbar.

Wie in Fig. 2 dargestellt ist der Querträger 14 als Hohlprofil hergestellt und weist eine zu dessen Oberseite über eine Öffnung 34 zugängliche T-Nut 36 auf, in welche Nutensteine zur Fixierung von Dachlasten am Querträger 14 einsetzbar sind.

Der Querträger 14 ist seinerseits mit einem Ständer 40 des Fußteils 20 verbunden, welcher mit einer Auflage 42 für das Ende 16 des Querträgers 14 versehen ist, wobei die Auflage 42 fest mit dem Querträger 14, beispielsweise durch Schrauben und Nieten, verbunden ist. Von der Auflage 42 erstreckt sich ein Ständerkörper 44 in Richtung des Fahrzeugdachs 24 bis zu einer Ständerbasis 46, von welcher ausgehend sich noch Ständerfüße 48 in Richtung des Fahrzeugdachs 24 erstrecken, welche in die jeweilige Aufnahme 26 hineinragen und auf den Stützflächen 28 derselben aufsetzbar sind.

Die Ständerbasis 46 wird dabei vorzugsweise durch eine sich quer zum Ständerkörper 44 verlaufende Basisplatte 50 gebildet, an welcher ein Fixierelement 52 angreift, um den Ständer 40 an der Aufnahme 26 zu fixieren.

Das Fixierelement 52 umfaßt ein Eindrehelement 54, welches einen Gewindeabschnitt 56 aufweist, der in die Gewindebohrung 30 der Aufnahme 26 einschraubbar ist und einen Kopf 58, an welchem ein Betätigungselement 60 mittels eines um eine Achse 62 schwenkbaren Gelenks 64 gelagert ist.

Das Gelenk 64 wird dabei gebildet durch ein an den Kopf 58 angeformtes Mittelstück 66, welches von einem am Betätigungselement 60 angeformten Gabelstück 68 beidseitig umgriffen ist.

Vorzugsweise wird die gelenkige Verbindung zwischen dem Mittelstück 66 und dem Gabelstück 68 durch Lagerbolzen 70 gebildet.

Ausgehend von dem Gabelstück 68 erstreckt sich dann das Betätigungselement 60 mit einem bolzenförmigen Abschnitt 72 bis zu einer Werkzeugaufnahme 74, die beispielsweise als Innensechskant ausgebildet ist, so daß in diese, wie in Fig. 2 dargestellt, ein Werkzeug 80 mit einem Außensechskant 82 einsetzbar ist.

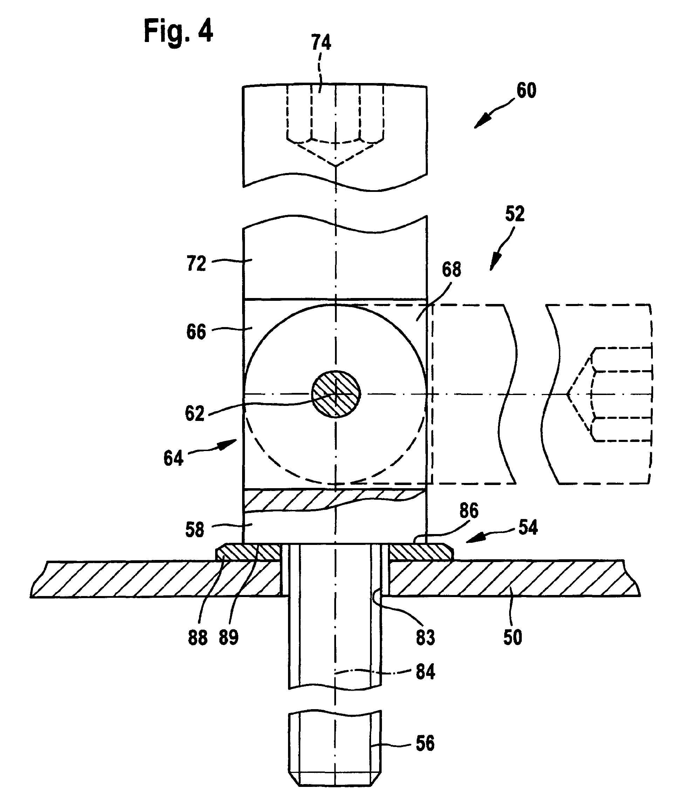

Das Eindrehelement 54 durchsetzt vorzugsweise eine Bohrung 83 der Basisplatte 50, wobei der Kopf 58 und das Betätigungselement auf einer der Aufnahme 26 gegenüberliegenden Seite der Basisplatte 50 angeordnet sind und sich der Gewindeabschnitt 56 in Richtung der Gewindebohrung 30 erstreckt (Fig. 4).

Zum Drehen des Eindrehelements 54 wird das Betätigungselement 60 vorzugsweise so ausgerichtet, daß es ungefähr mit einer Drehachse 89 des Gewindeabschnitts 56 fluchtend ausgerichtet ist, wobei geringe Fluchtungsfehler durch das Gelenk 64 beim Drehen ausgerichtet werden können.

Vorzugsweise liegt die Achse 62 ebenfalls so, daß sie die Drehachse 84 des Gewindeabschnitts 56 des Eindrehelements 54 schneidet.

Das Eindrehelement 54 gemäß dem ersten Ausführungsbeispiels ist dabei so ausgebildet, daß der Kopf 58 im Anschluß an den Gewindeabschnitt 56 einen Druckkörper 86 bildet, welcher entweder unmittelbar die Basisplatte 50 beaufschlagt oder über ein elastisches Zwischenelement 88, welches beispielsweise als Tellerfederring ausgebildet ist und zwischen einer Druckfläche 89 des Druckkörpers 86 und der Basisplatte 50 liegt und ringförmig den Gewindeabschnitt 56 umgibt. Durch das Eindrehelement 54 ist eine spielfreie Festlegung des Ständers 40 an der Aufnahme 26 erreichbar.

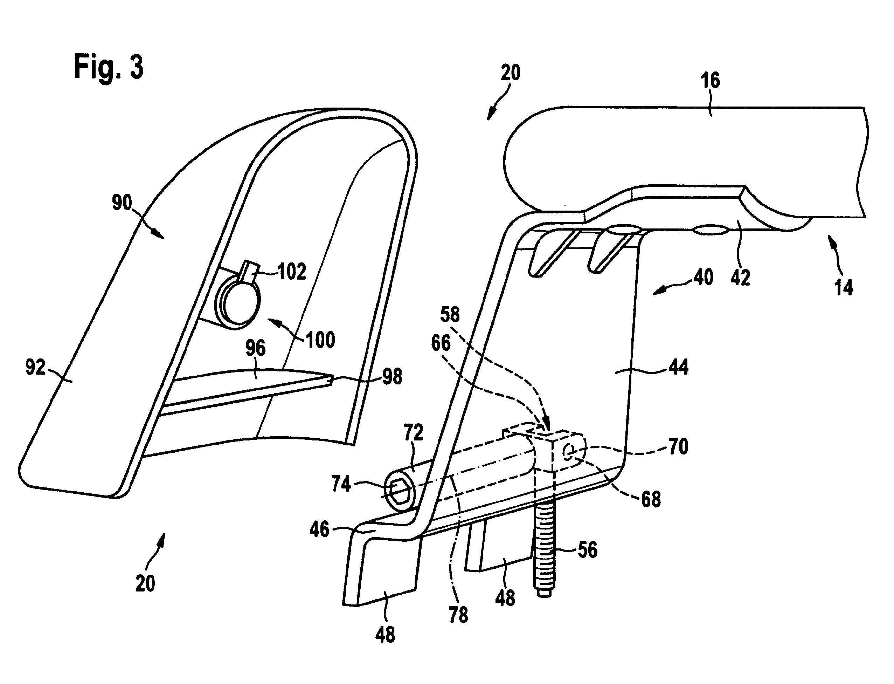

Zum Sichern der Stellung des Fixierelements 52 ist das Betätigungselement 60 in die in Fig. 4 gestrichelt gezeichnete und in Fig. 3 dargestellte Sicherungsstellung umklappbar, in welcher sich der bolzenförmige Abschnitt 72 mit seiner Längsachse 78 ungefähr parallel zur Basisplatte 50 erstreckt.

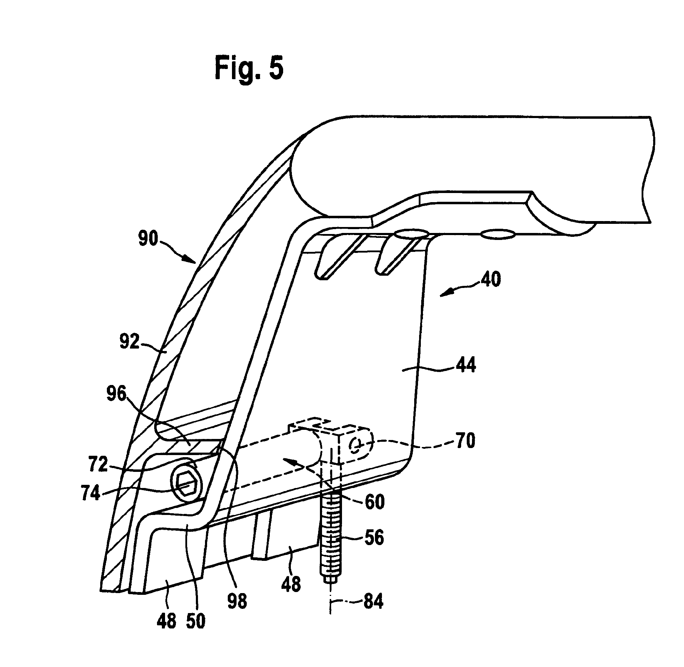

Vorzugsweise sitzt das Fixierelement 52 an der Basisplatte 50 so, daß dieses nahe an dem Ständerkörper 44 angeordnet ist, so daß, wie in Fig. 3 und Fig. 5 dargestellt, in der Sicherungsstellung des Betätigungselements 60 der Ständerkörper 44 eine Drehung des Eindrehelements 54 um seine Achse 84 in Richtung des Ständerkörpers 44, insbesondere aufgrund der Länge des bolzenförmigen Abschnitts 72, blockiert. Damit wäre der bolzenförmige Abschnitt 72 in seiner Sicherungsstellung nur noch so um die Drehachse 84 drehbar, daß dieser sich von dem Ständerkörper 44 weg bewegt.

Das Fußteil 20 umfaßt jedoch nicht nur den Ständer 40, sondern auch eine diesem zugeordnete Abdeckung 90, welche mit einem schalenförmigen Körper 92 sowohl eine Stirnseite 94 des Endes 16 des Querträgers 14 als auch die gesamte Flachseite des Ständers 40, insbesondere den Ständerkörper 44, die Ständerbasis 46 und zum Teil die Ständerfüße 48 übergreift und somit von der Stirnseite 94 des Querträgers 14 sich bis zur Aufnahme 26 im Fahrzeugdach 24 erstreckt.

Der schalenförmige Körper 92 verläuft dabei vorzugsweise im Abstand von dem Ständerkörper 44, liegt jedoch beispielsweise an den Ständerfüßen 48 auf einer Außenseite derselben an, so daß, wie in Fig. 5 dargestellt, bei auf den Ständer 40 aufgesetzter Abdeckung 90 das Betätigungselement 60 mit seinem bolzenförmigen Abschnitt 72 zwischen dem Ständerkörper 44 und dem schalenförmigen Körper 92 eingeschlossen ist und somit gegen eine nennenswerte Drehung um mehr als wenige Grad gesichert ist.

Darüber hinaus ist die Abdeckung 90 noch mit einem von dem schalenförmigen Körper 92 zum Ständerkörper 44 hin verlaufenden Steg 96 versehen, welcher derart angeordnet ist, daß er bei auf den Ständer 40 aufgesetzter Abdeckung 90 auf einer der Basisplatte 50 abgewandten Seite des in Sicherungsstellung stehenden Betätigungselements 60 verläuft und somit das Betätigungselement 60 daran hindert, um die Achse 62 von der Sicherungsstellung in eine Betätigungsstellung zu schwenken.

Somit ist bei auf den Ständer 40 aufgesetzter Abdeckung 90 das Betätigungselement 60 einerseits zwischen dem Ständerkörper 44 und dem schalenförmigen Körper 92 und andererseits zwischen der Basisplatte 50 und dem Steg 96 eingeschlossen, so daß das Betätigungselement 60 weder seine Sicherungsstellung verlassen noch sich um die Achse 84 nennenswert drehen kann.

Damit ist jegliches Lösen des Fixierelements 52 während der Fahrt verhindert.

Dadurch, daß sich der Steg 96 von dem schalenförmigen Körper 92 bis zum Ständerkörper 44 erstreckt, ist auch sichergestellt, daß die Abdeckung 90 nicht bei nicht in Sicherungsstellung stehendem Betätigungselement 60 aufgesetzt werden kann, da in diesem Fall der Steg 96 mit seiner dem Ständerkörper 44 zugewandten Kante 98 an dem Betätigungselement 60 anstoßen würde und somit verhindern würde, daß die Abdeckung 90 zuverlässig aufgesetzt werden kann.

Zum Fixieren der Abdeckung 90 ist diese vorzugsweise mit einem Schloß 100 versehen, welches einen Schloßriegel 102 aufweist, der bei aufgesetzter Abdeckung 90 in der Lage ist, in eine Schloßaufnahme 104 einzugreifen, so daß mit dem Schloß 100 auch die Sicherung der Abdeckung 90 relativ zum Ständer 40 erfolgt.

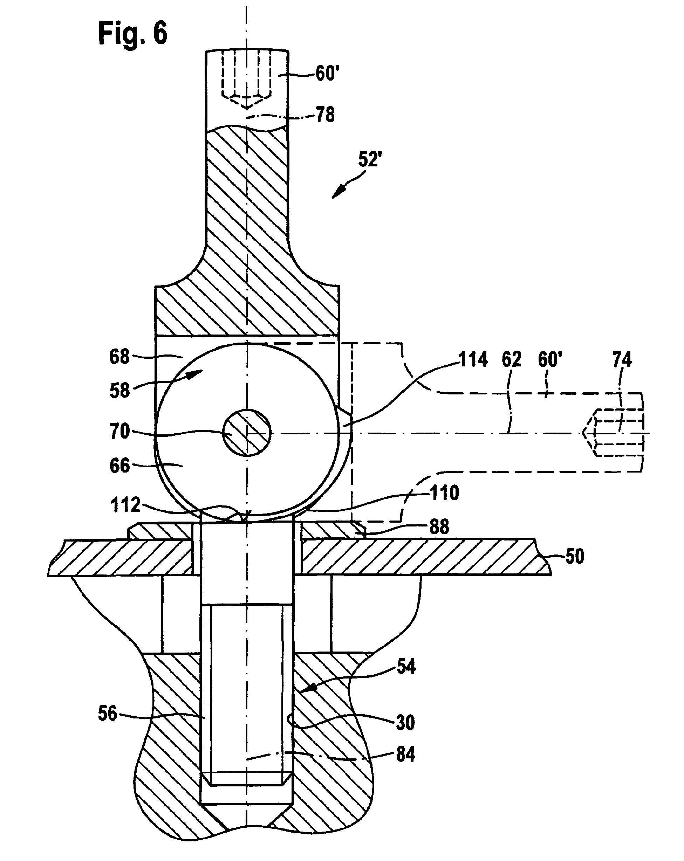

Bei einem zweiten Ausführungsbeispiel, dargestellt in Fig. 6 ist das Fixierelement 52' insofern anders ausgebildet, als der Kopf 58 keinen Druckkörper 86 aufweist, sondern lediglich mit dem Mittelstück 66 versehen ist.

Im Gegensatz zu dem voranstehenden Ausführungsbeispiel weist jedoch das Gabelstück 68 eine Außenkontur 110 auf, die exzentrisch zur Achse 62 verläuft, wobei bei in Betätigungsstellung stehendem Betätigungselement 60' ein Flächenbereich 112 der Außenkontur einen geringeren Abstand von der Achse 62 aufweist als der Flächenbereich 114, welcher in der Sicherungsstellung des Betätigungselements 60' auf das Zwischenelement 88 wirkt.

Das heißt, daß so lange, so lange das Betätigungselement 60' noch in der Betätigungsstellung steht, das ganze Fixierelement 52' noch nicht so stark auf das Zwischenelement 88 drückt, daß dieses nicht drehbar ist, sondern lediglich an dem Zwischenelement 88 anliegt. Durch Verschwenken des Betätigungselements 60' in die Sicherungsstellung wirkt jedoch der Flächenbereich 114 als Druckfläche auf das Zwischenelement 88 und aufgrund des größeren Abstandes des Flächenbereichs 114 von der Achse 62 führt dies zu einer exzenterähnlichen Beaufschlagung des Zwischenelements 88 und somit zu einem kraftschlüssigen Festlegen des Fixierelements 52' relativ zur Gewindebohrung 30 und relativ zur Basisplatte 50 und außerdem erfolgt gleichzeitig noch eine kraftschlüssige Festlegung des Betätigungselements 60' in der Sicherungsstellung.

Durch die exzenterähnliche Wirkung der Außenkontur 110 wird auch noch das Sichern des Ständers 40 relativ zur Aufnahme 26 erleichtert, da lediglich ein Eindrehen des Eindrehelements 54 in die Gewindebohrung 30 mit geringer Kraft notwendig ist und die kraftschlüssige und spielfreie Festlegung durch den exzenterähnlichen Verlauf der Außenkontur 110 zwischen dem Flächenbereich 112 und dem Flächenbereich 114 beim Umlegen des Betätigungselements 60' von der Betätigungsstellung in die Sicherungsstellung erreicht wird.

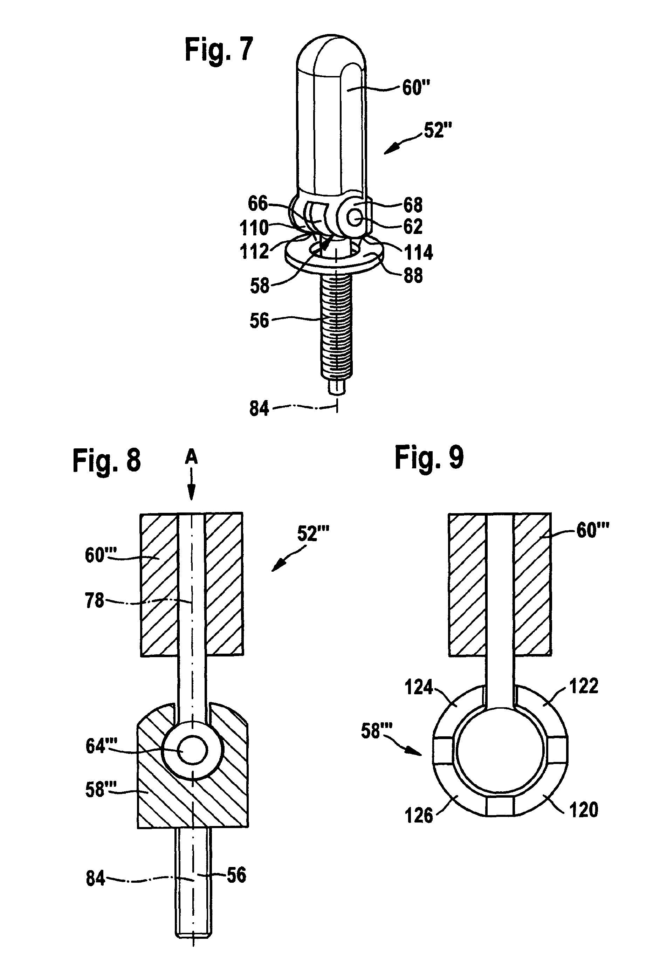

Bei einem dritten Ausführungsbeispiel eines erfindungsgemäßen Fixierelements 52", dargestellt in Fig. 7, sind diejenigen Elemente, die mit dem zweiten Ausführungsbeispiel identisch sind, mit denselben Bezugszeichen versehen, so daß hinsichtlich der Beschreibung derselben voll inhaltlich auf dieses Bezug genommen werden kann.

Insbesondere ist auch bei diesem Ausführungsbeispiel die Außenkontur 110 als zur Achse 62 exzentrische Kontur, in gleicher Weise wie beim zweiten Ausführungsbeispiel ausgebildet.

Im Unterschied zum zweiten Ausführungsbeispiel ist das Betätigungselement 60" lediglich als sich ausgehend von dem Gabelstück 68 erstreckendes Handbedienelement ausgebildet, welches nicht mehr mit einer Werkzeugaufnahme 74 versehen ist und somit ausschließlich nur noch von Hand bedienbar ist.

Die kraftschlüssige und spielfreie Festlegung erfolgt, wie bereits beim zweiten Ausführungsbeispiel erläutert, lediglich aufgrund des Verschwenkens des Betätigungselements 60" von der Betätigungsstellung in die Sicherungsstellung.

Bei einem Fixierelement 52"' eines vierten Ausführungsbeispiel eines erfindungsgemäßen Dachlastenträgers, dargestellt in Fig. 8 und 9, ist der Kopf 58"' über ein mehrachsiges Gelenk 64"' mit dem Betätigungselement 60"' verbunden, wobei der Kopf 58" vier oder mehr über das mehrachsige Gelenk 64"' nach oben überstehende Vorsprünge 120, 122, 124 und 126 aufweist, die dazu dienen, das mehrachsig drehbare Gelenk 64"' dann zu blockieren, wenn das Betätigungselement 60"' in der Sicherungsstellung steht. In dieser ist das Betätigungselement 60"' drehfest relativ zum Kopf 58"' drehfest festgelegt, so daß die gleiche Sicherungswirkung erreicht wird wie bei den voranstehenden Ausführungsbeispielen.

Ferner kann das Betätigungselement 60"' bei abgenommener Abdeckung 90 mit einer Ausrichtung seiner Längsachse 78 quer zur Drehachse 84 und durch Wechselwirkung mit den Vorsprüngen 120 bis 126 dazu eingesetzt werden, das Eindrehelement 54 zu drehen.

Bei einem fünften Ausführungsbeispiel eines erfindungsgemäßen Dachlastenträgers ist das Schloß 100 so angeordnet, daß der Schloßriegel 102 bei aufgesetzter Abdeckung 90 durch die Öffnung 34 in den Querträger 14 eingreift und im Bereich des Endes 16 festlegbar ist, um die Abdeckung 90 zu fixieren.

Im übrigen entspricht das fünfte Ausführungsbeispiel dem ersten Ausführungsbeispiel, so daß auf die Ausführungen hierzu vollinhaltlich Bezug genommen werden kann.

## Patentansprüche

1. Dachlastenträger umfassend einen sich von einem Längsseitenbereich (22a) eines Fahrzeugdachs (24) zum anderen Längsseitenbereich (22b) erstreckenden Querträger (14) sowie endseitig des Querträgers (14) angeordnete Fußteile (20), welche mit einem durch Drehen um eine Drehachse (84) an einem fahrzeugfesten Gegenstück (30) festlegbaren Fixierelement (52) in einer Aufnahme (26) an dem Fahrzeugdach (24) montierbar sind, **dadurch gekennzeichnet, daß** das Fixierelement (52) ein an dem Gegenstück (30) festlegbares Eindrehelement (54) und ein gelenkig an dem Eindrehelement (54) gelagertes Betätigungselement (60) aufweist, daß das Betätigungselement (60) zur Drehsicherung des Fixierelements (52) in eine sich quer zur Drehachse (84) erstreckende Sicherungsstellung umlegbar ist, in welcher das Betätigungselement (60) drehfest mit dem Eindrehelement (54) gekoppelt ist, und daß das Fußteil (20) Begrenzungselemente (44, 92, 50, 96) aufweist, welche ein Drehen des in der Sicherungsstellung stehenden Betätigungselements (60) um die Drehachse (84) im wesentlichen blockieren.

2. Dachlastenträger nach Anspruch 1, **dadurch gekennzeichnet, daß** das Fußteil (20) einen Ständer (40) und eine vom Ständer lösbare Abdeckung (90) umfasst.

3. Dachlastenträger nach Anspruch 2, **dadurch gekennzeichnet, daß** das Betätigungselement (60) bei vom Ständer gelöster Abdeckung (90) aus der Sicherungsstellung herausbewegbar ist.

4. Dachlastenträger nach Anspruch 2 oder 3, **dadurch gekennzeichnet, daß** alle Begrenzungselemente (44, 92, 50, 96) bei an dem Ständer (40) in Abdeckstellung fixierter Abdeckung (90) wirksam sind.

5. Dachlastenträger nach einem der Ansprüche 2 bis 4, **dadurch gekennzeichnet, daß** der Ständer (40) mit einem Ständerkörper (44) mindestens ein Begrenzungselement für das in der Sicherungsstellung stehende Betätigungselement (60) bildet.

6. Dachlastenträger nach einem der Ansprüche 2 bis 5, **dadurch gekennzeichnet, daß** der Ständer (40) mit einer Ständerbasis (46) ein Begrenzungselement für das in der Sicherungsstellung stehende Betätigungselement (60) bildet.

7. Dachlastenträger nach einem der Ansprüche 2 bis 6, **dadurch gekennzeichnet, daß** die Abdeckung (90) mindestens ein Begrenzungselement (92) für das in der Sicherungsstellung stehende Betätigungselement (60) bildet.

8. Dachlastenträger nach einem der Ansprüche 2 bis 7, **dadurch gekennzeichnet, daß** die Abdeckung (90) einen Steg (96) aufweist, welcher ein Begrenzungselement für das in der Sicherungsstellung stehende Betätigungselement (60) bildet.

9. Dachlastenträger nach einem der Ansprüche 2 bis 8, **dadurch gekennzeichnet, daß** die Abdeckung (90) und der Ständer (40) bei an dem Ständer (40) in Abdeckstellung fixierter Abdeckung (90) einen Aufnahmeraum für das in der Sicherungsstellung stehende Betätigungselement (60) begrenzen.

10. Dachlastenträger nach einem der Ansprüche 2 bis 9, **dadurch gekennzeichnet, daß** die Abdeckung (90) vom Ständer (40) abnehmbar ist.

11. Dachlastenträger nach einem der Ansprüche 2 bis 10, **dadurch gekennzeichnet, daß** die Abdeckung (90) in ihrer Abdeckstellung durch ein Schloß (100) am Ständer (40) festlegbar ist.

12. Dachlastenträger nach einem der Ansprüche 2 bis 10, **dadurch gekennzeichnet, daß** die Abdeckung (90) in ihrer Abdeckstellung durch ein Schloß (100') am Querträger (14) festlegbar ist.

13. Dachlastenträger nach einem der voranstehenden Ansprüche, **dadurch gekennzeichnet, daß** das Betätigungselement (60) über ein einachsiges Gelenk (64) mit dem Eindrehelement (54) verbunden ist.

14. Dachlastenträger nach einem der Ansprüche 1 bis 12, **dadurch gekennzeichnet, daß** das Betätigungselement (60) über ein mehrachsiges Gelenk (64"')mit dem Eindrehelement (54) verbunden ist und daß das mehrachsige Gelenk (64"') in der Sicherungsstellung eine drehfeste Verbindung zwischen dem Eindrehelement (54) und dem Betätigungselement (60) bildet.

15. Dachlastenträger nach einem der voranstehenden Ansprüche, **dadurch gekennzeichnet, daß** das Fußteil (20) ein Druckaufnahmeteil (50) aufweist, auf welches das Fixierelement (52) einwirkt.

16. Dachlastenträger nach Anspruch 15, **dadurch gekennzeichnet, daß** das Eindrehteil (54) das Druckaufnahmeteil (50) durchsetzt.

17. Dachlastenträger nach Anspruch 15 oder 16, **dadurch gekennzeichnet, daß** das Fixierelement (52) eine Druckfläche (89, 110) aufweist, mit welcher das Fixierelement (52) auf das Druckaufnahmeteil (54) wirkt.

18. Dachlastenträger nach Anspruch 17, **dadurch gekennzeichnet, daß** die Druckfläche (89) am Eindrehteil (54) vorgesehen ist.

19. Dachlastenträger nach Anspruch 17, **dadurch gekennzeichnet, daß** die Druckfläche (110) an dem Betätigungselement (60) angeordnet ist.

20. Dachlastenträger nach Anspruch 19, **dadurch gekennzeichnet, daß** die Druckfläche (110) als zu der Schwenkachse (62) des Betätigungselements (60) exzentrisch verlaufende Fläche ausgebildet ist, welche in der Sicherungsstellung einen größeren Abstand von der Schwenkachse (62) aufweist als in einer Betätigungsstellung.

21. Dachlastenträger nach einem der Ansprüche 17 bis 20, **dadurch gekennzeichnet, daß** zwischen der Druckfläche (89, 110) und dem Druckaufnahmeteil (50) ein elastisches Zwischenelement (88) wirksam ist.

22. Dachlastenträger nach Anspruch 21, **dadurch gekennzeichnet, daß** das elastische Zwischenelement (88) eine Tellerfeder umfaßt.

23. Dachlastenträger nach einem der voranstehenden Ansprüche, **dadurch gekennzeichnet, daß** das Betätigungselement (60) aus der Sicherungsstellung heraus in eine Betätigungsstellung bringbar ist.

24. Dachlastenträger nach Anspruch 23, **dadurch gekennzeichnet, daß** das Betätigungselement (60) Angriffsflächen (74) für ein Werkzeug (80) aufweist.
